**Europäisches Patentamt**

**European Patent Office**

**Office européen des brevets**

(11) Numéro de publication : **0 517 613 A1**

## (12) DEMANDE DE BREVET EUROPEEN

(21) Numéro de dépôt : **92401573.8**

(22) Date de dépôt : **05.06.92**

(51) Int. Cl.⁵ : **B29C 45/16, A47B 13/08**

(30) Priorité : **07.06.91 FR 9106969**

(43) Date de publication de la demande :
**09.12.92 Bulletin 92/50**

(84) Etats contractants désignés :
**BE DE ES FR GB GR IT NL PT**

(71) Demandeur : **ALLIBERT S.A.**
**129, avenue Léon Blum**
**F-38100 Grenoble (FR)**

(72) Inventeur : **Casagrande, Louis**
**Route de la Gorge**
**F-38410 Uriage (FR)**

(74) Mandataire : **Sabatier, Marc**
**83, Avenue Foch**
**F-75116 Paris (FR)**

(54) **Procédé de réalisation d'un objet composite notamment un plateau de table, par injection moulage de matières plastiques, presse à mouler pour la mise en oeuvre dudit procédé et objet ainsi obtenu.**

(57)    Un tel procédé consiste à mouler une première matière plastique en vu de constituer un support, de volume et de caractéristiques déterminés conférant à l'objet (15) des caractéristiques de résistance mécaniques, et d'une seconde matière plastique de peau recouvrant au moins partiellement le support et destinée à former une pellicule sur le support, ayant un bon état de surface.

   Le procédé selon l'invention est caractérisé en ce qu'il consiste à injecter préalablement le support (7) entre le poinçon (6) et une première matrice (4) correspondante, et successivement la peau (9) entre le même poinçon (6) et une seconde matrice (5) correspondante, amenée par transfert devant le poinçon unique (6), fixe en translation.

FIG_4

EP 0 517 613 A1

La présente invention concerne un procédé de réalisation d'un objet composite notamment un plateau de table, par injection-moulage d'une première matière plastique en vu de constituer un support, de volume et de caractéristiques déterminés conférant à l'objet des caractéristiques de résistance mécaniques, et d'une seconde matière plastique de peau recouvrant au moins partiellement le support et destinée à former une pellicule sur le support, ayant un bon état de surface.

Il est connu d'obtenir des objets composites de cette nature par un procédé dit d'"injection bi-matière" et consistant à introduire dans un moule, un volume relativement faible de matière de peau, en tout cas ne remplissant pas l'empreinte du moule, puis à injecter une matière dite de coeur, constituant un support et dont le volume complète celui de peau pour remplir l'empreinte. Lors de l'introduction de la matière de coeur, celle-ci repousse la matière de peau contre les parois internes du moule.

La mise en oeuvre d'un tel procédé connu, nécessite un appareillage complexe et difficile à exploiter notamment en ce qui concerne le passage d'une phase de première injection à une phase de seconde injection, lié à des conditions de température d'injection.

De plus l'injection bi-matière telle que définie ci-dessus procure un enveloppement complet de la matière de coeur ou support, par la matière de peau, ce qui n'est pas forcément indispensable dans certaines applications particulières, comme dans le cas d'un plateau de table ou d'une assise de tabouret, un dessus de déserte etc... ou seule la partie visible requiert un bon état de surface.

Par ailleurs ce procédé est généralement utilisé pour la réalisation d'objets simples et de faible encombrement pour lesquels il n'est pas à craindre la rupture de la peau lors de l'injection du coeur.

Or dans le cas par exemple d'une fabrication d'un plateau de table, en matière plastique destinée à un usage externe, les dimensions sont telles qu'il faut prévoir un support ayant des nervures de rigidification relativement importantes et complexes. Dans un tel cas l'injection bi-matière telle que connue est totalement inadaptée car l'on se heurte à des problèmes de manque de cohérence dans la répartition des deux matières plastiques dans le moule, la matière de peau ne migrant pas forcément en surface.

Pour ces raisons la demanderesse a été conduite à imaginer un nouveau procédé de fabrication, particulièrement avantageux dans la réalisation de certains objets, tels que ceux précités, qui bien que mettant en oeuvre deux matières plastiques différentes, ne reprend pas la technique d'"injection bi-matière" connue et définie ci-dessus.

On aurait bien entendu pû imaginer, de réaliser, un support sous forme d'un insert sur lequel on surmoulerait ultérieurement une peau de finition, mais celà présente d'autres types de problèmes.

En effet la stablilité mécanique dudit insert, au sortir du moule, n'est assurée qu'après un délai d'environ 48 heures ce qui fait courir le risque de reprendre un objet déformé de planeité non acceptable pour un dessus de table par exemple.

De plus celà implique, stockage et manutentions répétées de l'insert préalablement réalisé, ce qui n'est pas sans incidence sur le coût.

La présente invention a pour objet de résoudre tous ces problèmes liés à ces différentes techniques de moulage. A cet effet elle concerne un procédé de réalisation d'un objet composite notamment un plateau de table, par injection-moulage d'une première matière plastique en vu de constituer un support, de volume et de caractéristiques déterminés conférant à l'objet des caractéristiques de résistance mécaniques, et d'une seconde matière plastique de peau recouvrant au moins partiellement le support et destinée à former une pellicule sur le support, ayant un bon état de surface, caractérisé en ce qu'il consiste à injecter préalablement le support entre un poinçon et une première matrice correspondante, et successivement la peau entre le même poinçon et une seconde matrice correspondante, amenée par transfert devant le poinçon unique, fixe en translation.

Ainsi la partie visible de l'objet, constituée par la peau, peut être de faible épaisseur et réalisée avec différents type de matières nobles afin de permettre d'avoir un large éventail de finition, (brillance, couleur, sérigraphie, transparence, aspect marbre etc ...), l'ensemble formant un objet d'un très bel aspect ne possédant aucune trace de retassure ou de dépression, donnant en plus, une sensation d'épaisseur, de poids et de rigidité par la présence sous jacente du support, quant à lui de grande résistance mécanique.

D'autres caractéristiques apparaîtront au cours de la description qui va suivre, donnée à titre d'exemple, et effectuée en regard de dessins annexés sur lesquels :

- Les figures 1 à 5 représentent schématiquement les étapes successives du procédé selon l'invention pour l'obtention d'un plateau de table circulaire.

- La figure 6 est une vue partielle en coupe d'un plateau de table obtenu selon le procédé des figures 1 à 5.

- Les figures 7 et 8 sont des vues en perspective de différents types de supports de plateau de table, obtenus dans une première phase du procédé selon l'invention et extrait du moule pour une meilleure compréhension.

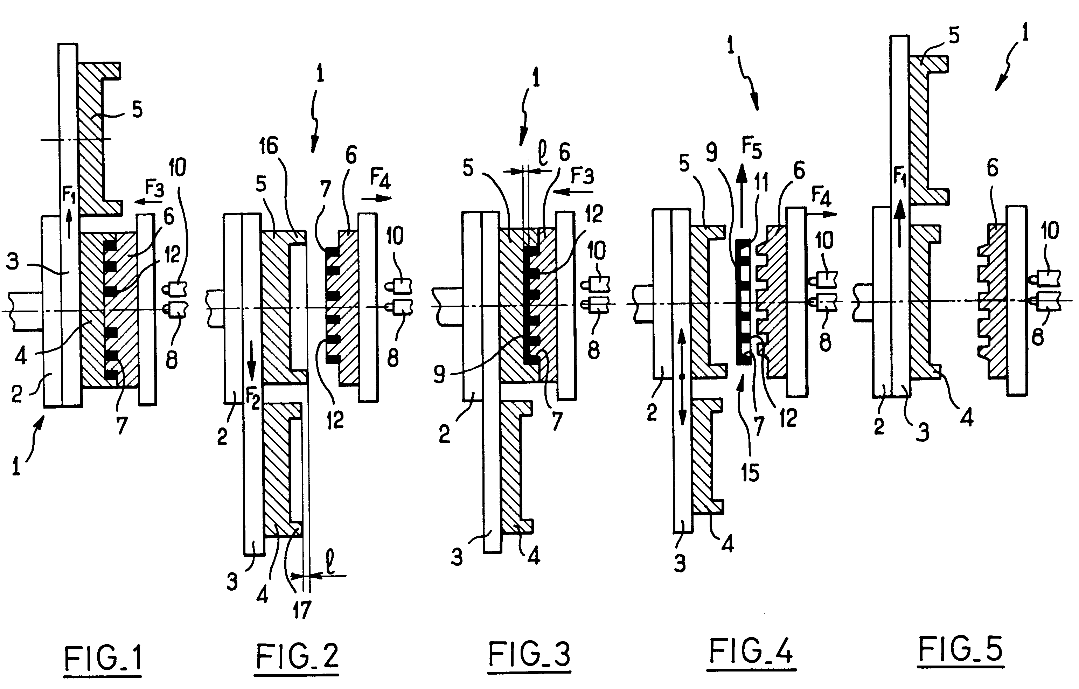

La presse à mouler 1 désignée dans son ensemble sur les figures 1 à 5 est constituée d'un plateau fixe 2 sur lequel est susceptible de coulisser en translation dans les sens F1, F2 un plateau mobile 3 supportant deux matrices 4 et 5 pour assurer successivement le transfert, selon un sens vertical F1 de haut en bas, de la première matrice 4 devant un poinçon unique 6, correspondant à une première phase de moulage d'un support 7 à partir d'une première buse d'injection 8, et le transfert de la seconde matrice (5) devant le même poinçon 6 dans un sens F2 inverse au sens F1, correspondant à une seconde phase de moulage d'une peau 9 à partir d'une seconde buse d'injection 10.

Selon l'exemple de presse 1 choisie, le poinçon unique 6 est fixé en translation et mobile axialement, selon le sens F3 à la fermeture du moule et selon le sens F4 à l'ouverture du moule.

Bien entendu l'ouverture et la fermeture dudit moule pourraient également être effectuées par déplacement axial des matrices 4,5 par action transversale sur le plateau 2.

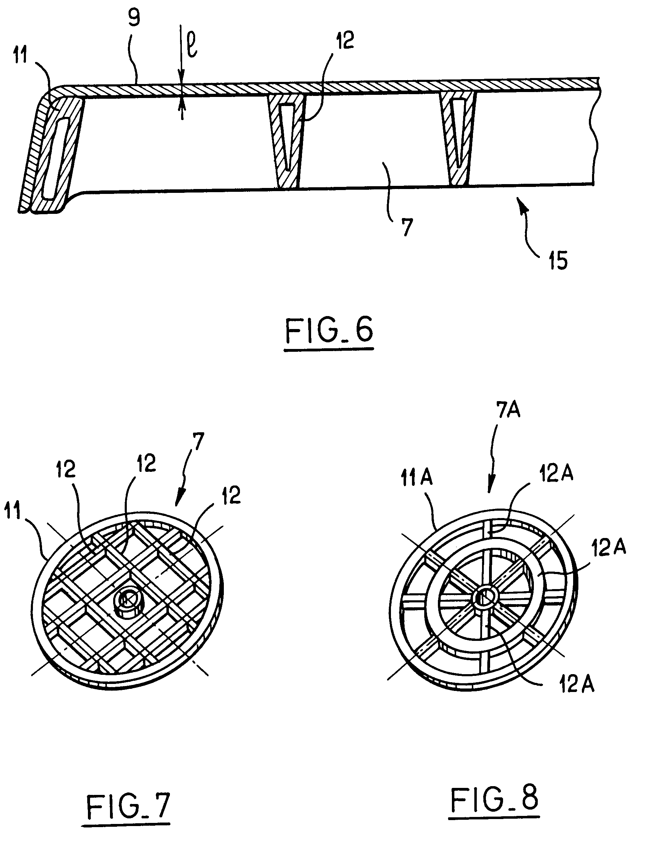

Une telle presse à mouler permet la mise en oeuvre du procédé d'injection moulage pour la réalisation d'un objet composite , en l'occurence un plateau de table 15, essentiellement constitué par un support 7 ou 7A (figures 7 et 8) revêtu superficiellement et sur son bord périphérique 11 ou 11A par une peau 9.

Ledit support 7, 7A est composé, outre son bord périphérique 11, 11A, de nervures 12, 12A de rigidification, obtenues lors de la première phase de moulage pour constituer ledit support.

Ce procédé est remarquable par les étapes suivantes :

- délimitation d'une première empreinte de moulage entre le poinçon 6 et la première matrice 4, correspondant au support à mouler 7 et dans laquelle empreinte débouche un premier orifice d'injection ou buse 8.

- fermeture du moule par déplacement axial selon le sens F3 du poinçon 6 (figure 1).

- injection dans la première empreinte d'un volume d'une première matière plastique correspondant au support 7 à réaliser, par l'intermédiaire de la buse 8 (figure 1).

- ouverture du moule selon le sens F4 (figure 2).

- transfert de la seconde matrice 5, en regard du poinçon 6 par translation du plateau mobile 3 dans le sens F2 (figure 2).

- fermeture du moule selon F3 du poinçon 6 (figure 3).

- délimitation d'une seconde empreinte de moulage entre le poinçon 6 et la seconde matrice 5 correspondant à la peau à mouler 9 et dans laquelle seconde empreinte débouche un second orifice d'injection ou buse 10, le support 7 n'ayant pas été démoulé du poinçon 6 (figure 3).

- injection dans la seconde empreinte, d'un volume d'une seconde matière plastique correspondant à la peau 9 et adhérant au support 7, contre lequel elle est injectée, par thermofusion des matières plastiques respectives (figure 3). ouverture du moule (figure 4).

- éjection et évacuation de l'objet 15 dans le sens F5 (figure 4) par l'intermédiaire d'un robot.

- transfert dans le sens F1 de la première matrice 4, en regard du poinçon 6 (figure 5).

- fermeture du moule pour un nouveau cycle de moulage (figure 1).

Il faut noter ici, que la délimitation de l'empreinte destinée au moulage du support 7, d'où de ses nervures constitutives 12, est entièrement réalisée en creux dans la face frontale du poinçon 6, le plan de joint de celui-ci avec le fond de la matrice 4 se confondant, pour ne laisser filtrer aucune partie de matière constituant ledit support 7. Par contre, comme démontré aux figures 2 et 3, le bord circulaire 16 de la matrice 5 destinée au moulage de la peau 9 est d'une hauteur supérieure à celui du bord circulaire 17 de la matrice 4 ayant précédemment servi au moulage du support 7, cette différence de hauteur "1" délimite l'empreinte de la peau 9 entre la face frontale du poinçon 6 et le fond de la matrice 5 et détermine ainsi son épaisseur. A titre d'exemple pour un plateau de 80 cm de diamètres : 1 = 2,5 mms.

Dans le procédé qui vient d'être décrit l'accrochage des deux matières, respectivement du support 7 et de la peau 9 s'effectue uniquement par thermofusion, mais il est évident qu'il pourrait être renforcé par tous moyens mécaniques, tels que crochets, logements, contre dépouilles etc... Afin d'éviter tout retrait pendant le refroidissement de l'objet 15,on maintient en pression la matière par un apport d'azote, celà permet d'éviter de continuer à apporter de la matière pour maintenir ladite pression.

Les compositions à mouler pour la mise en oeuvre du procédé de moulage décrit ci-dessus, sont constituées préférentiellement par des matières thermoplastiques tant pour le support 7 oui 7A que pour la peau 9.

En ce qui concerne la peau 9 la matière plastique est choisie parmi les matières suivantes :

- Acrylonitrile Butadienne Styrène (ABS)
- Polystyrène
- Polyéthylène polypropylène (POLYOLEFINE)
- Styrène Acrylonitrile (SAN)
- Polyméthylméthacrylate (PMMA)
- Polyamide
- Polycarbonate
- Polybutylène Téréphtalate (PBT).

Les mêmes matériaux peuvent être retenus en ce qui concerne la réalisation du support 7 ou 7A à la différence près, qu'ils comporteront des charges minérales ou organiques, telles que talc, carbonate de calcium, fibres de verre etc...

Les températures d'injection de la matière de peau 9 et de la matière du support 7 ou 7A sont comprises entre 200 °C et 260 °C.

Un plateau ainsi obtenu recevra ultérieurement un jeu de pieds en vue de constituer une table destinée à un usage extérieur par exemple.

**Revendications**

1. Procédé de réalisation d'un objet composite (15) notamment un plateau de table, par injection-moulage d'une première matière plastique en vu de constituer un support, de volume et de caractéristiques déterminés conférant à l'objet (16) des caractéristiques de résistance mécanique, et d'une seconde matière plastique de peau recouvrant au moins partiellement le support et destinée à former une pellicule sur le support, ayant un bon état de surface, lequel procédé est remarquable par les étapes suivantes :
   - délimitation d'une première empreinte de moulage entre le poinçon (6) et une première matrice (4), correspondant au support à mouler (7, 7 A) et dans laquelle empreinte débouche un premier orifice d'injection (8).
   - fermeture du moule par déplacement axial (F 3) du poinçon (6)
   - injection dans la première empreinte d'un volume d'une première matière plastique correspondant au support (7, 7 A) à réaliser.
   - ouverture du moule
   - transfert d'une seconde matrice (5) en regard du poinçon (6)
   - fermeture du moule pour délimitation d'une seconde empreinte de moulage entre le poinçon (6) et la seconde matrice (5) correspondant à la peau à mouler (9) et dans laquelle seconde empreinte débouche un second orifice d'injection (10), le support (7, 7 A) n'ayant pas été démoulé du poinçon (6)
   - injection dans la seconde empreinte, d'un volume d'une seconde matière plastique correspondant à la peau (9) et adhérant au support (7, 7 A) contre lequel elle est injectée, par thermofusion des matières plastiques respectives.
   - ouverture du moule
   - éjection et évacuation de l'objet (15)
   - transfert de la première matrice (4) en regard du poinçon (6)
   - fermeture du moule pour un nouveau cycle de moulage.

2. Procédé selon la revendication 1 caractérisé en ce que la peau est constituée d'une matière plastique choisie parmi les matières suivantes :
   - Acrylonitrile Butadienne Styrène (ABS)
   - Polystyrène
   - Polyéthylène Polypropylène (Polyolefine)
   - Styrène Acrylonitrile (SAN)
   - Polyméthylméthacrylate (PMMA)
   - Polyamide
   - Polycarbonate
   - Polybutylène Téréphtalate (PBT)

3. Procédé selon la revendication 1 caractérisée en ce que le support est constitué d'une matière plastique choisie parmi les matières suivantes :
   - Acrylonitrile Butadienne Styrène (ABS)
   - Polystyrène
   - Polyéthylène Polypropylène (Polyolefine)
   - Styrène Acrylonitrile (SAN)
   - Polyméthylmétacrylate (PMMA)
   - Polyamide
   - Polycarbonate
   - Polybutylène Téréphtalate (PBT),
   ayant des charges minérales ou organiques telles que talc, carbonate de calcium, fibres de verre, etc...

4. Presse à mouler par injection (1) pour la mise en oeuvre du procédé selon l'une des revendications 1 à 3, caractérisée en ce qu'elle comprend un plateau fixe (2) sur lequel est succeptible de coulisser en translation un plateau mobile (3) supportant les deux matrices (4 et 5) pour assurer successivement le transfert de la première matrice (4) devant le poiçon (6) pour une première phase de moulage correspondant à la réalisation du support (7), à partir d'une première buse d'injection (8) de matière thermoplastique, et le transfert de la seconde matrice (5) devant le même poinçon (6) pour la seconde phase de moulage correspondant à la réalisation de la peau (9) à partir d'une seconde buse d'injection (10) d'une autre matière thermoplastique.

5. Presse à mouler selon la revendication 4 caractérisée en ce que les matières thermoplastiques de support (7, 7 A) et la peau (9) sont injectés à des températures comprises entre 200 ° C et 260 ° C.

FIG.1   FIG.2   FIG.3   FIG.4   FIG.5

EP 0 517 613 A1

FIG_6

FIG_7

FIG_8

6

Office européen
des brevets

# RAPPORT DE RECHERCHE EUROPEENNE

Numero de la demande

EP    92 40 1573

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | FR-A-1 442 480 (KRIER)<br>* le document en entier *<br>--- | 1 | B29C45/16<br>A47B13/08 |
| Y | PATENT ABSTRACTS OF JAPAN<br>vol. 13, no. 335 (M-856)(3683) 27 Juillet 1989<br>& JP-A-1 113 217 ( KUNIMORI KAGAKU )<br>* abrégé *<br>--- | 1,4 | |
| Y | PATENT ABSTRACTS OF JAPAN<br>vol. 11, no. 385 (M-651)(2832) 16 Décembre 1987<br>& JP-A-62 152 822 ( KUNIMORI KAGAKU )<br>* abrégé *<br>--- | 1,4 | |
| Y | EP-A-0 341 880 (NISSEI JUSHI KOGYO KABUSHIKI KAISHA)<br>* colonne 7, ligne 10 - ligne 54; figure 6 *<br>--- | 1,4 | |
| Y | DE-A-4 011 263 (ALPS ELECTRIC CO.)<br>* colonne 4, ligne 43 - ligne 64; figure 4 *<br>--- | 1,4 | |
| A | FR-A-2 141 911 (AOKI)<br>* page 3, ligne 20 - page 4, ligne 32; figures *<br><br>----- | 1,4 | **DOMAINES TECHNIQUES RECHERCHES (Int. Cl.5)**<br><br>B29C<br>A47B |

Le présent rapport a été établi pour toutes les revendications

| Lieu de la recherche | Date d'achèvement de la recherche | Examinateur |
|---|---|---|
| LA HAYE | 01 SEPTEMBRE 1992 | BOLLEN J.A.G. |